# EUROPEAN PATENT APPLICATION

(11) **EP 4 525 515 A1**
(43) Date of publication of application: **19.03.2025**
(21) Application number: 22941127.7
(22) Date of filing: 12.05.2022
(51) Int. Cl.: H04W 36/00

(54) **INFORMATION REPORTING METHOD AND APPARATUS, INFORMATION RECEIVING METHOD AND APPARATUS, DEVICE, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Hersina, Günter
(86) International application number: PCT/CN2022/092343
(87) International publication number: WO 2023/216169

(57) **Abstract**

The present application relates to the field of mobile communications, and discloses an information reporting method and apparatus, an information receiving method and apparatus, a device, and a storage medium. The method comprises: the terminal records NPN information in a CEF report variable in response to triggering a CEF, the NPN information indicating a NPN cell in which a CEF occurs, and sends a CEF report corresponding to the CEF report variable to a network device, the CEF report comprising the NPN information. The present application provides a mode for the terminal to report the NPN information by means of the CEF report when the CEF occurs in an NPN scenario, which supports recording and reporting the NPN information when the CEF occurs, ensures the stability of transmission, and thus ensures the reliability of communication.

## Description

### FIELD

The present invention relates to the field of mobile communications, and in particular relates to a method and an apparatus for reporting information, a method and an apparatus for receiving information, a device and a storage medium.

### BACKGROUND

In a mobile communication system, a non-public network (NPN) is introduced to provide a transmission service for a terminal. For the terminal, connection establishment failure (CEF) will occur on the terminal, and how the terminal reports CEF information has become an urgent problem to be solved.

### SUMMARY

Embodiments of the present invention provide a method and an apparatus for reporting information, a method and an apparatus for receiving information, a device and a storage medium, which support storing and reporting of NPN information in a case where a CEF occurs, thereby ensuring the stability of the transmission, and thus ensuring the reliability of the communication. The technical solutions are as follows.

According to an aspect of the present invention, there is provided a method for reporting information, performed or executed by a terminal, including: storing NPN information in a CEF report variable in response to triggering a CEF, in which the NPN information indicates an NPN cell where the CEF occurs; and sending a CEF report corresponding to the CEF report variable to a network device.

According to an aspect of the present invention, there is provided a method for receiving information, performed or executed by a network device, including: receiving a CEF report corresponding to a CEF report variable sent by a terminal, in which NPN information is stored in the CEF report variable by the terminal in response to triggering a CEF, and the NPN information indicates an NPN cell where the CEF occurs.

According to an aspect of the present invention, there is provided an apparatus for reporting information, including: a storing module configured to store NPN information in a CEF report variable in response to triggering a CEF, in which the NPN information indicates an NPN cell where the CEF occurs; and a sending module configured to send a CEF report corresponding to the CEF report variable to a network device.

In some embodiments, the NPN information includes an NPN identifier and a cell identifier corresponding to a failed cell.

In some embodiments, the sending module is further configured to send the CEF report corresponding to the CEF report variable to the network device in response to the CEF report variable including registered NPN information.

In some embodiments, the apparatus further includes: a determining module, configured to determine that the terminal triggers the CEF in response to determining that a timer expires, in which the timer indicates a duration for establishing or resuming a radio resource control (RRC) connection.

In some embodiments, the apparatus further includes: a receiving module, configured to receive request information sent by the network device, in which the request information indicates the terminal to send the CEF report.

In some embodiments, the sending module is further configured to send an availability indication to the network device, in which the availability indication is used to indicate whether corresponding CEF information is available.

In some embodiments, the sending module is further configured to send capability indication information to the network device, in which the capability indication information indicates whether the terminal has a capability of supporting execution of storing the NPN information in the CEF report and reporting the NPN information.

In some embodiments, the apparatus further includes: a receiving module, configured to receive configuration information sent by the network device, in which the configuration information is used to configure the terminal to store the NPN information.

In some embodiments, the apparatus further includes: a processing module, configured to reset a counter to zero and clear the content included in the CEF report variable in response to registered NPN information of the terminal being not equal to the NPN information stored in the CEF report variable, in which the counter is used to record a number of CEFs occurring at the terminal.

In some embodiments, the processing module is further configured to clear the content included in the CEF report variable in response to registered NPN information of the terminal being the same as the NPN information included in the CEF report variable.

In some embodiments, the apparatus further includes: a discarding module configured to discard the CEF report after sending the CEF report to the network device.

According to an aspect of the present invention, there is provided an apparatus for receiving information, including: a receiving module configured to receive a CEF report corresponding to a CEF report variable sent by a terminal, in which NPN information is stored in the CEF report variable by the terminal in response to triggering a CEF, and the NPN information indicates an NPN cell where the CEF occurs.

In some embodiments, the NPN information includes an NPN identifier and a cell identifier corresponding to a failed cell.

In some embodiments, the CEF report is sent by the terminal in response to the CEF report variable including registered NPN information.

In some embodiments, the apparatus further includes: a sending module configured to send request information, in which the request information indicates the terminal to send the CEF report.

In some embodiments, the receiving module is further configured to receive an availability indication sent by the terminal, in which the availability indication is used to indicate whether corresponding CEF information is available.

In some embodiments, the receiving module is further configured to receive capability indication information sent by the terminal, in which the capability indication information indicates whether the terminal has a capability of supporting execution of storing the NPN information in the CEF report and reporting the NPN information.

In some embodiments, the apparatus further includes: a sending module configured to send configuration information to the terminal, in which the configuration information is used to configure the terminal to store the NPN information.

According to an aspect of the present invention, there is provided a terminal, including: a processor; a transceiver coupled to the processor; and a memory for storing instructions executable by the processor; in which the processor is configured to load and execute executable instructions to cause the method for reporting information according to the above aspect to be implemented.

According to an aspect of the present invention, there is provided a network device, including: a processor; and a transceiver coupled to the processor; and a memory for storing instructions executable by the processor; in which the processor is configured to load and execute executable instructions to cause the method for receiving information according to the above aspect to be implemented.

According to an aspect of the present invention, there is provided a computer-readable storage medium having stored therein executable program code, in which the executable program code is loaded and executed by a processor to cause the method for reporting information according to the above aspect or the method for receiving information according to the above aspect to be implemented.

According to an aspect of the present invention, there is provided a chip, in which the chip includes a programmable logic circuit and/or program instructions, and is configured to cause the method for reporting information according to the above aspect or the method for receiving information according to the above aspect to be implemented when runs on a terminal or a network device.

According to an aspect of the present invention, there is provided a computer program product, in which the computer program product is configured to cause the method for reporting information according to the above aspect or the method for receiving information according to the above aspect to be implemented when executed by a processor of a terminal or a network device.

In information reporting and information receiving solutions provided in embodiments of the present invention, a method in which the terminal reports the NPN information through the CEF report in a case where the CEF occurs in an NPN scenario is provided, and thus the storing and reporting of the NPN information is supported in the case where the CEF occurs, thereby ensuring the stability of the transmission, and thus ensuring the reliability of the communication.

### BRIEF DESCRIPTION OF THE DRAWINGS

In order to clearly illustrate technical solutions of the embodiments of the present invention, a brief description of drawings used in the embodiments is given below. Obviously, the drawings in the following descriptions are only some embodiments of the present invention, and other drawings may also be obtained by those skilled in the art according to these drawings without creative labor.
FIG. 1 is a block diagram illustrating a communication system provided according to an illustrative embodiment of the present invention.
FIG. 2 is a flow chart illustrating a method for reporting information provided according to an illustrative embodiment of the present invention.
FIG. 3 is a flow chart illustrating a method for reporting information provided according to an illustrative embodiment of the present invention.
FIG. 4 is a flow chart illustrating a method for reporting information provided according to an illustrative embodiment of the present invention.
FIG. 5 is a block diagram illustrating an apparatus for reporting information provided according to an illustrative embodiment of the present invention.
FIG. 6 is a block diagram illustrating another apparatus for reporting information provided according to an illustrative embodiment of the present invention.
FIG. 7 is a block diagram illustrating an apparatus for receiving information provided according to an illustrative embodiment of the present invention.
FIG. 8 is a block diagram illustrating another apparatus for receiving information provided according to an illustrative embodiment of the present invention.
FIG. 9 is a schematic block diagram illustrating a communication device provided according to an illustrative embodiment of the present invention.

### DETAILED DESCRIPTION

In order to clarify the object, technical solution, and advantages of the present invention, embodiments of the present invention will be further described in detail below with reference to the accompanying drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the invention. Instead, they are merely examples of apparatuses and methods consistent with some aspects related to the invention as recited in the appended claims.

Terms used herein in the present invention are only for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the present invention for describing various information, these information should not be limited by these terms. These terms are only used for distinguishing information of the same type from each other. For example, first information may also be referred to as second information, and similarly, the second information may also be referred to as the first information, without departing from the scope of the present invention. As used herein, the term "if" may be construed to mean "when" or "upon" or "in response to determining" depending on the context.

It should be noted that information (including, but not limited to, user equipment information, user personal information and the like), data (including, but not limited to, data used for analysis, stored data, displayed data and the like) and signals involved in the present invention are all authorized by users or fully authorized by all parties, and collection, use and processing of relevant data need to comply with relevant laws, regulations and standards of relevant countries and regions.

Hereinafter, application scenarios of the present invention will be described.

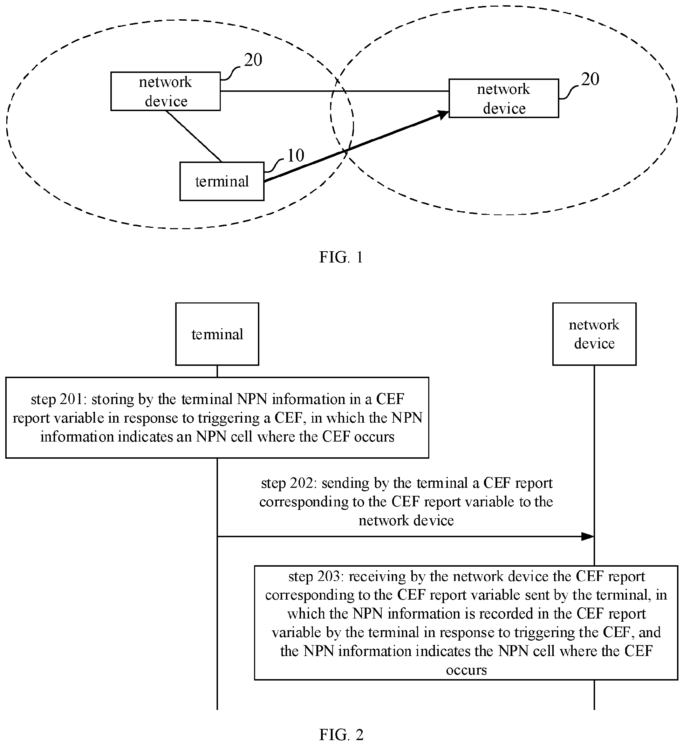

FIG. 1 is a block diagram illustrating a communication system provided according to an illustrative embodiment of the present invention. The communication system may include a terminal 10 and a network device 20.

A number of terminals 10 is typically multiple, and one or more terminals 10 may be distributed in a cell managed by each network device 20. The terminal 10 may include various handheld devices, vehicle-mounted devices, wearable devices, computing devices, or other processing devices connected to wireless modems, as well as various forms of user equipments (UEs), mobile stations (MSs), and the like having a wireless communication function. For convenience of description, the above-mentioned devices are collectively referred to as the terminal in embodiments of the present invention.

The network device 20 is an apparatus deployed in an access network for providing the wireless communication function for the terminal 10. For convenience of description, the above-described devices that provide the wireless communication function for the terminal 10 in embodiments of the present invention are collectively referred to as the network device. A connection may be established between the network device 20 and the terminal 10 through a radio, thereby performing communication through the connection, including signaling and data interaction. A number of network devices 20 may be multiple, and two adjacent network devices 20 may communicate with each other in a wired or wireless manner. The terminal 10 may switch between different network devices 20, that is, establish a connection with different network devices 20.

The network device 20 may include various forms of macro base stations, micro base stations, relay stations, access points, and the like. In a system using different radio access technologies, names of devices having a network device function may be different, for example, they are called gNodeB or gNB in a 5G new radio (NR) system. With evolution of communication technologies, the name "network device" may change.

FIG. 2 is a flow chart illustrating a method for reporting information provided according to an illustrative embodiment of the present invention. Illustratively, the method may be performed or executed by the terminal and the network device as shown in FIG. 1, including at least some of the following contents.

In step 201, the terminal stores non-public network (NPN) information in a connection establishment failure (CEF) report variable in response to triggering a CEF, in which the NPN information indicates an NPN cell where the CEF occurs.

The CEF refers to a case where the terminal fails to establish a radio resource control (RRC) connection during a process of establishing or resuming the RRC connection. The CEF report variable is used to store information. The NPN information refers to information related to a cell in which the terminal establishes or resumes the RRC connection.

In embodiments of the present invention, the terminal performs setup or resumption of the RRC connection. However, the setup of the RRC connection may fail during this process, that is, the terminal triggers the CEF. In a case where the terminal triggers the CEF, the NPN information is stored in the CEF report variable, and the NPN cell where the CEF occurs is indicated by the NPN information.

In step 202, the terminal sends a CEF report corresponding to the CEF report variable to the network device.

In embodiments of the present invention, in a case where the CEF is triggered, the terminal stores the NPN information into the CEF report variable, and sends the CEF report corresponding to the CEF report variable to the network device. Since the NPN information is stored in the CEF report variable, the CEF report sent also includes the NPN information, which may also be understood as sending by the terminal the stored NPN information to the network device.

In some embodiments, the CEF report variable may be a VarConnEstFailReport (a CEF report variable) or a VarConnEstFailReportList (a CEF report variable list), and the CEF report may be a connEstFailReport (a CEF report) or a connEstFailReportList (a CEF report list).

For example, in a case where the CEF report variable is the VarConnEstFailReport, the terminal may send the connEstFailReport corresponding to the VarConnEstFailReport to the network device. Alternatively, in a case where the CEF report variable is the VarConnEstFailReportList, the terminal sends the connEstFailReportList corresponding to the VarConnEstFailReportList to the network device.

In some embodiments, the CEF report is reported via a UEInformationResponse (a terminal information response).

It should be noted that in embodiments of the present invention, the terminal sending the CEF report to the network device is taken as an example for explanation. In another embodiment, the terminal may also discard the CEF report.

In some embodiments, the CEF report is discarded after the terminal sends the CEF report to the network device. In a case where the terminal sends the CEF report to the network device, the terminal does not need to send an availability indication of the CEF report, and the CEF report is discarded, thereby saving a storage resource of the terminal.

It should be noted that the CEF report is discarded after the terminal sends the CEF report to the network device according to embodiments of the present invention. In another embodiment, in a case where the terminal does not send the CEF report after a preset duration, the terminal also discards the CEF report.

The preset duration is configured by the network, or is agreed by a communication protocol, or is configured by other methods, which is not limited in the embodiments of the present invention. For example, the preset duration is 48 hours, 72 hours, or other numerical values, which is not limited in the embodiments of the present invention.

In step 203, the network device receives the CEF report corresponding to the CEF report variable sent by the terminal, in which the NPN information is stored in the CEF report variable by the terminal in response to triggering the CEF, and the NPN information indicates the NPN cell where the CEF occurs.

In embodiments of the present invention, the terminal sends the CEF report to the network device, and the network device may determine the NPN information corresponding to the CEF triggered by the terminal according to the received CEF report, that is, the NPN cell that triggers the CEF is determined.

It should be noted that the steps executed by the network device may form an embodiment alone, and the steps executed by the terminal may also form an embodiment alone, which are not limited in the present invention.

According to the solutions provided in embodiments of the present invention, a method in which the terminal reports the NPN information through the CEF report in a case where the CEF occurs in an NPN scenario is provided, and thus the storing and reporting of the NPN information is supported in the case where the CEF occurs, thereby ensuring stability of transmission, and thus ensuring reliability of communication.

The embodiment shown in FIG. 2 describes an interaction flow between the terminal and the network device. In some embodiments, the NPN information includes multiple kinds of information, and the multiple kinds of information included in the NPN information will be described below.

In some embodiments, the NPN information includes an NPN identifier including any of the following.
(1) Stand-alone NPN (SNPN) identifier (ID).
   The SNPN does not depend on a network function provided by a public land mobile network (PLMN), that is, the SNPN is independent of the PLMN. Therefore, the handover between the SNPN and the PLMN networks is not supported.
(2) Public network integrated NPN (PNI-NPN) ID.
   The PNI-NPN provides an NPN service through the PLMN network, and may be used for access control through a cell access group (CAG).
(3) Network identifier (NID).
(4) CAG ID.

In some embodiments, the NPN information includes an NPN identifier and a cell identifier corresponding to a failed cell. The NPN identifier is any of the identifiers in the above-described embodiments.

Furthermore, the NPN information in embodiments of the present invention may also include other information. For example, by a time on which the terminal detects connection resumption failure, a tracking area code (TAC) of the failed cell determined; a reference signal receiving power (RSRP), a reference signal received quality (RSRQ) and a synchronization signal block (SSB) index at a cell level; as well as an RSRP, an RSRQ, and an SSB index at an SSB level are measured according to an available SSB.

In some embodiments, the NPN identifier is a selected NPN ID selected by a non-access stratum (NAS) layer and provided to an access stratum (AS) layer.

It should be noted that in embodiments of the present invention, the NPN information including the NPN identifier is taken as an example for explanation. In another embodiment, the NPN information further includes at least one of the following.
(1) Available measurement result of neighboring cell (measResultNeighCells).

The neighboring cell is ordered according to an R criterion used for cell reselection. The measurement result is a measurement result based on the latest cell reselection evaluation. It should be noted that an available optional field is included for each included neighboring cell.

Regarding the SNPN, the neighboring cell includes at least one of an NR intra-frequency neighboring cell or an inter-frequency neighboring cell.

Regarding the PNI-NPN, the neighboring cell may include at least one of an intra-frequency neighboring cell, an inter-frequency neighboring cell, and an inter-system neighboring cell.

(2) Available location information of terminal.

(3) Random access information: related information for performing random access.

The random access information may be represented by perRAInfoList (a kind of random access information).

### (4) Counter.

The counter is increased by 1 each time the CEF occurs at the terminal.

In some embodiments, the counter is represented by numberOfConnFail (a counter). In a case where the numberOfConnFail does not exceed a preset number of times, it is increased by 1.

Optionally, the preset number of times is 8, 10, 12, or other numerical values, which is not limited in the embodiments of the present invention.

In the solution provided in embodiments of the present invention, the NPN information includes the NPN identifier to indicate a cell in which the terminal triggers the CEF, thereby improving the comprehensiveness of the NPN information reported by the terminal. Furthermore, the NPN information further includes information other than the NPN identifier, which expands the diversity of information included in the NPN information.

In the embodiment shown in FIG. 2, the terminal sending the CEF report is illustrated. In some embodiments, the terminal sends the CEF report in a case where certain conditions are met. Specifically, the terminal needs to send the CEF report in a case where the NPN information has been registered.

In some embodiments, the terminal sends the CEF report corresponding to the CEF report variable to the network device in response to the CEF report variable including registered NPN information.

In embodiments of the present invention, the terminal needs to register with an NPN where it is located, and in a case where the registered NPN information is stored in the CEF report variable, it means that the terminal may report the CEF report at this time, and thus the terminal sends the CEF report corresponding to the CEF report variable to the network device. It may also be understood that only when the terminal successfully registers in the NPN, may the terminal send the CEF report to the network device.

It should be noted that, in embodiments of the present invention, the step in which the terminal sends the CEF report corresponding to the CEF report variable to the network device in response to the CEF report variable including registered NPN information may replace step 202 in the embodiment shown in FIG. 2.

In some embodiments, the CEF report variable further includes a failure duration indicating a duration from the last time the terminal starts the setup or resumption of the RRC connection to a moment on which the setup or resumption of the RRC connection fails.

For example, the failure duration is represented by timesincfailure (a signaling field). That is, the timesincfailure is included in the VarConnEstFailReport or the VarConnEstFailReportList.

In embodiments of the present invention, in a case where the terminal determines that the CEF report variable includes the registered NPN information, the failure duration is set to a duration from the last time the terminal starts the setup or resumption of the RRC connection to a moment on which the setup or resumption of the RRC connection fails.

For example, in a case where the terminal determines that the registered NPN information is included in the VarConnEstFailReport, the timesincfailure in the VarConnEstFailReport is set to a duration from the last time the terminal starts the setup or resumption of the RRC connection to a moment on which the setup or resumption of the RRC connection fails.

For another example, in a case where the terminal determines that the registered NPN information is included in the VarConnEstFailReportList, the timesincfailure in the VarConnEstFailReportList is set to a duration from the last time the terminal starts the setup or resumption of the RRC connection to a moment on which the setup or resumption of the RRC connection fails. Further, the terminal sends the VarConnEstFailReportList as the ConnEstFailReportList to the network device via the UEInformationResponse.

According to the method provided in embodiments of the present invention, in a case where the terminal has registered the NPN information, that is, in a case where the CEF report variable includes the registered NPN information, the terminal may send the CEF report to the network device, thereby ensuring the reliability of the CEF report reported by the terminal.

The embodiment shown in FIG. 2 is described by taking an example in which the terminal stores the NPN information in response to triggering the CEF. In another embodiment, the terminal may determine whether to trigger the CEF by determining whether a timer expires.

In some embodiments, the terminal determines that the terminal triggers the CEF in response to determining that the timer expires, in which the timer indicates a duration for establishing or resuming the RRC connection.

In embodiments of the present invention, the terminal is provided with the timer, and the timer indicates the duration for establishing or resuming the RRC connection, and it may also be understood that the timer is the duration for establishing or resuming the RRC connection to the terminal. In a case where the timer expires, it means that the terminal may not establish or resume the RRC connection, and it is determined that the terminal triggers the CEF.

The duration of the timer is set by the terminal, or is agreed by the communication protocol, or is set by other means, which is not limited in embodiments of the present invention. For example, the timer is 5s (seconds), 10s, or other values.

Optionally, the timer includes a T319 timer or a T300 timer specified in the existing protocol, or other newly defined timers.

For example, in a case where the timer is the T319 timer, and the T319 timer expires, it is determined that the terminal triggers the CEF. In a case where the timer is the T300 timer, and the T300 timer expires, it is determined that the terminal triggers the CEF.

It should be noted that, in embodiments of the present invention, a step of determining that the terminal triggers the CEF according to the timer is executed before step 201 in the embodiment shown in FIG. 2.

In the solution provided in embodiments of the present invention, the terminal determines whether to trigger the CEF by determining whether the timer expires, and then determines whether to store the NPN information into the CEF report variable, which improves the accuracy of the terminal in determining to trigger the CEF, and then improves the accuracy of storing the NPN information.

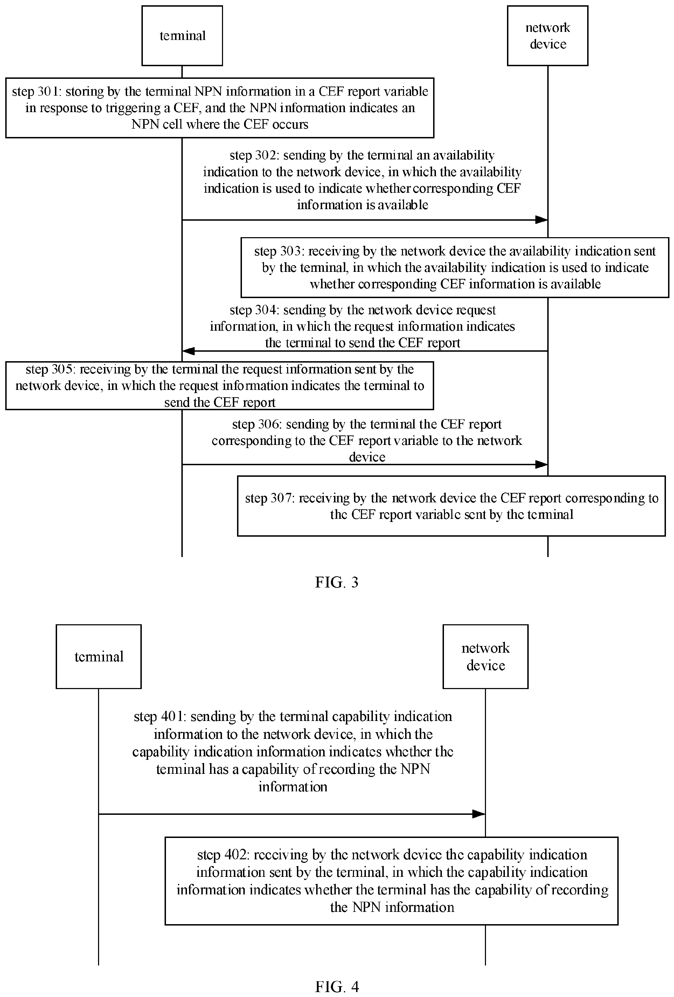

The embodiment shown in FIG. 2 is described by taking an example in which the terminal directly sends the CEF report to the network device. In another embodiment, the terminal also sends the CEF report based on request information sent by the network device. FIG. 3 is a flow chart illustrating a method for reporting information provided according to an illustrative embodiment of the present invention. For example, the method may be performed or executed by the terminal and the network device as shown in FIG. 1, and the method includes at least some of the following contents.

In step 301, the terminal stores NPN information in a CEF report variable in response to triggering a CEF, and the NPN information indicates an NPN cell where the CEF occurs.

Step 301 is similar to step 201 in the embodiment shown in FIG. 2 described above, and will not be described in detail here.

In step 302, the terminal sends an availability indication to the network device, in which the availability indication is used to indicate whether corresponding CEF information is available.

In step 303, the network device receives the availability indication sent by the terminal, in which the availability indication is used to indicate whether corresponding CEF information is available.

The CEF information refers to information stored by the terminal in the CEF report variable.

In embodiments of the present invention, the terminal stores information in the CEF report variable. Moreover, regarding the CEF report variable, the terminal needs to report the availability indication to the network device, and the availability indication is used to indicate whether the CEF information corresponding to the availability indication is available. That is, the availability indication is used to indicate whether the CEF report variable is available, so that the network device determines whether to allow the terminal to send the CEF report according to the sent availability indication.

In some embodiments, the availability indication is sent via an RRC message.

Optionally, the RRC message includes any one of an RRC connection setup complete message, an RRC reconfiguration complete message, an RRC re-setup complete message or an RRC resumption complete message.

It should be noted that embodiments of the present invention are described by taking as an example steps 301-302 to enable the terminal to send the availability indication to the network device. In another embodiment, steps 301-302 may not be performed, but steps 303-304 may be performed directly by the terminal and the network device.

In step 304, the network device sends request information, in which the request information indicates the terminal to send the CEF report.

In step 305, the terminal receives the request information sent by the network device, in which the request information indicates the terminal to send the CEF report.

In embodiments of the present invention, the network device sends the request information, and it may be determined that the CEF report may be sent to the network device after the terminal receives the request information sent by the network device, and therefore the CEF report corresponding to the CEF report variable stored in the terminal itself is sent to the network device.

In some embodiments, in a case where the terminal reports the availability indication to the network device, the network device determines the CEF report which is requested to be reported by the terminal according to the availability indication.

In other embodiments, in a case where the terminal does not report the availability indication to the network device, the network device may directly request the terminal to report the CEF report.

In step 306, the terminal sends the CEF report corresponding to the CEF report variable to the network device.

In step 307, the network device receives the CEF report corresponding to the CEF report variable sent by the terminal.

Steps 306-307 are similar to steps 202-203 in the embodiment shown in FIG. 2 described above, and will not be described in detail herein.

It should be noted that the steps executed by the network device may form an embodiment alone, and the steps executed by the terminal may form an embodiment alone, which are not limited in the present invention.

In the solution provided in embodiments of the present invention, the terminal sends the CEF report to the network device according to the request information sent by the network device, thereby ensuring that the terminal correctly reports the CEF report to the network device and improving the accuracy of the terminal in sending the CEF report.

Furthermore, the terminal may also report the availability indication to the network device to indicate whether the CEF information is available via the availability indication, and then the network device may request the terminal to report the CEF report according to the availability indication, thereby improving the accuracy of the terminal in sending the CEF report.

In the present invention, the terminal may also actively report a capability of itself to store the NPN information. FIG. 4 is a flow chart illustrating a method for reporting information provided according to an illustrative embodiment of the present invention. For example, the method may be performed or executed by the terminal and the network device as shown in FIG. 1, and the method includes at least some of the following contents.

In step 401, the terminal sends capability indication information to the network device, in which the capability indication information indicates whether the terminal has a capability of supporting execution of storing the NPN information in the CEF report and reporting the NPN information.

In step 402, the network device receives the capability indication information sent by the terminal, in which the capability indication information indicates whether the terminal has the capability of supporting execution of storing the NPN information in the CEF report and reporting the NPN information.

In embodiments of the present invention, the terminal reports to the network device via the capability indication information whether the terminal itself has the capability of supporting execution of storing the NPN information in the CEF report and reporting the NPN information. Moreover, it is determined whether the terminal has the capability of storing the NPN information after the network device receives the capability indication information. For the terminal, only the terminal with the capability of supporting execution of storing the NPN information in the CEF report and reporting the NPN information will perform the step of reporting the CEF report subsequently.

In the solution provided in embodiments of the present invention, the terminal indicates itself to have the capability of supporting execution of storing the NPN information in the CEF report and reporting the NPN information by sending the capability indication information, thereby facilitating subsequent reporting of the NPN information to the network device, and ensuring the reliability of the communication.

It should be noted that steps 401-402 in embodiments of the present invention may be performed before step 201 in the embodiment of FIG. 2, or steps 401-402 in embodiments of the present invention may be performed after step 201, or steps 401-402 in embodiments of the present invention may be performed separately, without limiting an order of performance of the steps in the embodiment of FIG. 2.

It should be noted that the embodiment shown in FIG. 4 is described by taking the terminal itself actively reporting the capability indication information as an example. In another embodiment, the network device may also configure the terminal to store the NPN information.

The network device sends configuration information to the terminal, the configuration information is used to configure the terminal to store the NPN information, and the terminal receives the configuration information sent by the network device.

In embodiments of the present invention, the network device configures the terminal to store the NPN information by sending the configuration information to the terminal. For the terminal, in a case where the terminal receives the configuration information sent by the network device, the terminal may have the capability of storing NPN information, and subsequently sends the CEF report to the network device.

In the solution provided in embodiments of the present invention, the network device sends the configuration information to the terminal, so that the terminal has the capability of storing the NPN information, thereby facilitating subsequent reporting of the NPN information to the network device, and ensuring the reliability of the communication.

In the above embodiments, how the terminal sends the CEF report to the network device is described. For the terminal, the terminal further adjusts the counter and the CEF report variable according to the registered NPN information. Specifically, the terminal performs the following steps.

The first type of step is as follows: the counter is reset to zero and the content included in the CEF report variable is cleared in response to the registered NPN information of the terminal being not equal to the NPN information stored in the CEF report variable, in which the counter is used to record a number of CEFs occurring at the terminal.

In embodiments of the present invention, the terminal stores the NPN information in a case where the CEF is triggered in the CEF report variable. However, for the terminal, the NPN information that the terminal has successfully registered may be not equal to the NPN information stored in the CEF report variable. At this time, it is indicated that an NPN where the terminal triggers the CEF is different from an NPN where the terminal has successfully registered with. Moreover, a number of times recorded by the counter of the terminal is not a number of times the CEF is triggered in the registered NPN. Therefore, the terminal resets the counter to zero and clears the content included in the CEF report variable.

In some embodiments, in a case where the NPN registered by the terminal is not equal to an NPN identifier stored in the CEF report variable, the terminal resets the counter to zero and clears the content included in the CEF report variable.

The second type of step is as follows: the content included in the CEF report variable is cleared in response to the registered NPN information of the terminal being the same as the NPN information included in the CEF report variable.

In embodiments of the present invention, the terminal stores the NPN information in the case where the CEF is triggered in the CEF report variable. However, for the terminal, the NPN information that the terminal has successfully registered is the same as the NPN information stored in the CEF report variable. At this time, it is indicated that the NPN where the terminal triggers the CEF is the same as the NPN where the terminal has successfully registered with. Moreover, the number of times recorded by the counter of the terminal is the number of times the CEF is triggered in the registered NPN. Therefore, the terminal continues to count by using the counter to clear the content included in the CEF report variable.

It should be noted that the terminal needs to clear the content included in the CEF report variable regardless of whether the CEF report variable includes the registered NPN information.

In the solution provided in embodiments of the present invention, the terminal determines whether to reset the counter according to the NPN information in the CEF report variable and the registered NPN information, and further clears the content included in the CEF report variable to ensure the accuracy of the terminal in reporting the CEF report.

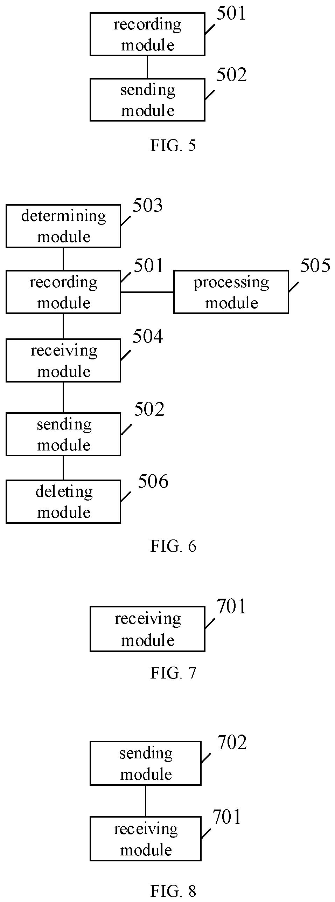

FIG. 5 is a block diagram illustrating an apparatus for reporting information provided according to an illustrative embodiment of the present invention. Referring to FIG. 5, the apparatus includes: a storing module 501 configured to store NPN information in a CEF report variable in response to triggering a CEF, in which the NPN information indicates an NPN cell where the CEF occurs; and a sending module 502 configured to send a CEF report corresponding to the CEF report variable to a network device.

In some embodiments, the NPN information includes an NPN identifier and a cell identifier corresponding to a failed cell.

In some embodiments, the sending module 502 is further configured to send the CEF report corresponding to the CEF report variable to the network device in response to the CEF report variable including registered NPN information.

In some embodiments, referring to FIG. 6, the apparatus further includes: a determining module 503 configured to determine that the terminal triggers the CEF in response to determining that a timer expires, in which the timer indicates a duration for establishing or resuming an RRC connection.

In some embodiments, referring to FIG. 6, the apparatus further includes: a receiving module 504 configured to receive request information sent by the network device, in which the request information indicates the terminal to send the CEF report.

In some embodiments, the sending module 502 is further configured to send an availability indication to the network device, in which the availability indication is used to indicate whether corresponding CEF information is available.

In some embodiments, the sending module 502 is further configured to send capability indication information to the network device, in which the capability indication information indicates whether the terminal has a capability of supporting execution of storing the NPN information in the CEF report and reporting the NPN information.

In some embodiments, referring to FIG. 6, the apparatus further includes: the receiving module 504 configured to receive configuration information sent by the network device, in which the configuration information is used to configure the terminal to store the NPN information.

In some embodiments, referring to FIG. 6, the apparatus further includes: a processing module 505 configured to reset a counter to zero and clear the content included in the CEF report variable in response to registered NPN information of the terminal being not equal to the NPN information stored in the CEF report variable, in which the counter is used to record the number of CEFs occurring at the terminal.

In some embodiments, the processing module 505 is further configured to clear the content included in the CEF report variable in response to registered NPN information of the terminal being the same as the NPN information included in the CEF report variable.

In some embodiments, referring to FIG, 6, the apparatus further includes: a discarding module 506 configured to discard the CEF report after sending the CEF report to the network device.

It should be noted that the apparatus provided in the above-mentioned embodiments is merely exemplified by division of the above-mentioned functional modules in a case of realizing the functions thereof. In practical applications, the above functions may be allocated to different functional modules according to needs, that is, an internal structure of the apparatus is divided into different functional modules to perform all or some of the functions described above. Furthermore, the apparatus and method embodiments provided in the above embodiments belong to the same concept, and a specific implementation process of the apparatus may be found in the method embodiments, which will not be described in detail here.

FIG. 7 is a block diagram illustrating an apparatus for receiving information provided according to an illustrative embodiment of the present invention. Referring to FIG. 7, the apparatus includes: a receiving module 701 configured to receive a CEF report corresponding to a CEF report variable sent by a terminal, in which NPN information is stored in the CEF report variable by the terminal in response to triggering a CEF, and the NPN information indicates an NPN cell where the CEF occurs.

In some embodiments, the NPN information includes an NPN identifier and a cell identifier corresponding to a failed cell.

In some embodiments, the CEF report is sent by the terminal in response to the CEF report variable including registered NPN information.

In some embodiments, referring to FIG. 8, the apparatus further includes: a sending module 702 configured to send request information, in which the request information indicates the terminal to send the CEF report.

In some embodiments, the receiving module 701 is further configured to receive an availability indication sent by the terminal, in which the availability indication is used to indicate whether corresponding CEF information is available.

In some embodiments, the receiving module 701 is further configured to receive capability indication information sent by the terminal, in which the capability indication information indicates whether the terminal has a capability of supporting execution of storing the NPN information in the CEF report and reporting the NPN information.

In some embodiments, referring to FIG. 8, the apparatus further includes: the sending module 702 configured to send configuration information to the terminal, in which the configuration information is used to configure the terminal to store the NPN information.

It should be noted that the apparatus provided in the above-mentioned embodiments is merely exemplified by division of the above-mentioned functional modules in a case of realizing the functions thereof. In practical applications, the above functions may be allocated to different functional modules according to needs, that is, an internal structure of the apparatus is divided into different functional modules to perform all or some of the functions described above. Furthermore, the apparatus and method embodiments provided in the above embodiments belong to the same concept, and a specific implementation process of the apparatus may be found in the method embodiments, which will not be described in detail here.

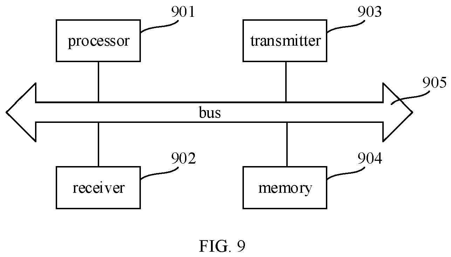

FIG. 9 is a schematic block diagram illustrating a communication device provided according to an illustrative embodiment of the present invention. The communication device includes: a processor 901, a receiver 902, a transmitter 903, a memory 904 and a bus 905.

The processor 901 includes one or more processing cores. The processor 901 executes various functional applications and information processing by running software programs and modules.

The receiver 902 and transmitter 903 may be implemented as a communication component, which may be a communication chip.

The memory 904 is coupled to the processor 901 via the bus 905.

The memory 904 may be used to store at least one program code, and the processor 901 is used to execute the at least one program code to implement each step in the above method embodiment.

Furthermore, the communication device may be the terminal or the network device. The memory 1004 may be implemented by any type or combination of volatile or non-volatile storage devices including, but not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an illustrative embodiment, there is also provided a computer-readable storage medium having stored therein executable program code that is loaded and executed by a processor to cause the method for reporting information or the method for receiving information performed or executed by the communication device provided in the respective method embodiments described above to be implemented.

In an illustrative embodiment, there is provided a chip including programmable logic circuits and/or program instructions, which is configured to cause the method for reporting information or the method for receiving information provided in the respective method embodiments described above to be implemented when runs on a terminal or a network device.

In an illustrative embodiment, there is provided a computer program product that, to when executed by a processor of a terminal or a network device, causes the method for reporting information or the method for receiving information provided in the respective method embodiments described above to be implemented.

It would be understood by those skilled in the art that all or some of the steps in the above-described embodiments may be completed by hardware, or may be completed by relevant hardware instructed by a program. The program may be stored in the computer readable storage medium. The storage medium mentioned above may be read-only memories, magnetic disks, CDs, or the like.

The above descriptions are only optional embodiments of the present invention, and are not intended to limit the present invention. Any modification, equivalent replacement and improvement made within the spirit and principle of the present invention shall be included in the protection scope of the present invention.

## Claims

1. A method for reporting information, performed by a terminal, comprising:
storing non-public network (NPN) information in a connection establishment failure (CEF) report variable in response to triggering a CEF, wherein the NPN information indicates an NPN cell where the CEF occurs; and
sending a CEF report corresponding to the CEF report variable to a network device.

2. The method of claim 1, wherein the NPN information comprises an NPN identifier and a cell identifier corresponding to a failed cell.

3. The method of claim 1, wherein sending the CEF report corresponding to the CEF report variable to the network device comprises:
sending the CEF report corresponding to the CEF report variable to the network device in response to the CEF report variable comprising registered NPN information.

4. The method of claim 1, further comprising:
determining that the terminal triggers the CEF in response to determining that a timer expires, wherein the timer indicates a duration for establishing or resuming a radio resource control (RRC) connection.

5. The method of any one of claims 1 to 4, further comprising:
receiving request information sent by the network device, wherein the request information indicates the terminal to send the CEF report.

6. The method of claim 5, further comprising:
sending an availability indication to the network device, wherein the availability indication is used to indicate whether corresponding CEF information is available.

7. The method of any one of claims 1 to 6, further comprising:
sending capability indication information to the network device, wherein the capability indication information indicates whether the terminal has a capability of supporting execution of storing the NPN information in the CEF report and reporting the NPN information.

8. The method of any one of claims 1 to 6, further comprising:
receiving configuration information sent by the network device, wherein the configuration information is used to configure the terminal to store the NPN information.

9. The method of any one of claims 1 to 8, further comprising:
resetting a counter to zero and clearing a content included in the CEF report variable in response to registered NPN information of the terminal being not equal to the NPN information stored in the CEF report variable, wherein the counter is used to record a number of CEFs occurring at the terminal.

10. The method of any one of claims 1 to 8, further comprising:
clearing a content included in the CEF report variable in response to registered NPN information of the terminal being the same as the NPN information stored in the CEF report variable.

11. The method of any one of claims 1 to 10, further comprising:
discarding the CEF report after sending the CEF report to the network device.

12. A method for receiving information, performed by a network device, comprising:
receiving a connection establishment failure (CEF) report corresponding to a CEF report variable sent by a terminal, wherein non-public network (NPN) information is stored in the CEF report variable by the terminal in response to triggering a CEF, and the NPN information indicates an NPN cell where the CEF occurs.

13. The method of claim 12, wherein the NPN information comprises an NPN identifier and a cell identifier corresponding to a failed cell.

14. The method of claim 12, wherein the CEF report is sent by the terminal in response to the CEF report variable comprising registered NPN information.

15. The method of any one of claims 12 to 14, further comprising:
sending request information, wherein the request information indicates the terminal to send the CEF report.

16. The method of claim 15, further comprising:
receiving an availability indication sent by the terminal, wherein the availability indication is used to indicate whether corresponding CEF information is available.

17. The method of any one of claims 12 to 16, further comprising:
receiving capability indication information sent by the terminal, wherein the capability indication information indicates whether the terminal has a capability of supporting execution of storing the NPN information in the CEF report and reporting the NPN information.

18. The method of any one of claims 12 to 17, further comprising:
sending configuration information to the terminal, wherein the configuration information is used to configure the terminal to store the NPN information.

19. An apparatus for reporting information, comprising:
a storing module configured to store non-public network (NPN) information in a connection establishment failure (CEF) report variable in response to triggering a CEF, wherein the NPN information indicates an NPN cell where the CEF occurs; and
a sending module configured to send a CEF report corresponding to the CEF report variable to a network device.

20. An apparatus for receiving information, comprising:
a receiving module configured to receive a connection establishment failure (CEF) report corresponding to a CEF report variable sent by a terminal, wherein non-public network (NPN) information is stored in the CEF report variable by the terminal in response to triggering a CEF, and the NPN information indicates an NPN cell where the CEF occurs.

21. A terminal, comprising:
a processor; and
a transceiver coupled to the processor;
wherein the processor is configured to load and execute executable instructions to cause the method for reporting information of any one of claims 1 to 11 to be implemented.

22. A network device, comprising:
a processor; and
a transceiver coupled to the processor;
wherein the processor is configured to load and execute executable instructions to cause the method for receiving information of any one of claims 12 to 18 to be implemented.

23. A computer-readable storage medium having stored therein executable program code, wherein the executable program code is loaded and executed by a processor to cause the method for reporting information of any one of claims 1 to 11 or the method for receiving information of any one of claims 12 to 18 to be implemented.

24. A computer program product, wherein the computer program product is configured to cause the method for reporting information of any one of claims 1 to 11 or the method for receiving information of any one of claims 12 to 18 to be implemented when executed by a processor of a terminal or a network device.
